# EUROPÄISCHE PATENTSCHRIFT

(11) **EP 0 585 424 B1**
(45) Veröffentlichungstag und Bekanntmachung des Hinweises auf die Patenterteilung: **26.06.1996**
(21) Anmeldenummer: 93903844.4
(22) Anmeldetag: 03.03.1993
(51) Int. Cl.: G01P 15/08

(54) **SENSOR**
SENSOR
CAPTEUR

(30) Priorität: 21.03.1992 DE 4209272
(43) Veröffentlichungstag der Anmeldung: 09.03.1994
(73) Patentinhaber: ROBERT BOSCH GMBH, 70442 Stuttgart (DE)
(72) Erfinder: HAAS, Lothar, D-8501 Rosstal (DE); SCHMIDT, Hans-Joerg, D-8501 Dietenhofen (DE)
(86) Internationale Anmeldenummer: DE9300186
(87) Internationale Veröffentlichungsnummer: WO9319377

(56) Entgegenhaltungen:
- EP-A- 0 345 722
- DE-A- 3 540 947

## Beschreibung

### Stand der Technik

Die Erfindung geht aus von einem Sensor zum selbstätigen Auslösen von Sicherheitseinrichtungen in Kraftfahrzeugen nach der Gattung des Hauptanspruchs. Es ist zum Beispiel aus der nachveröffentlichten DE-OS 40 36 224.8 ein derartiger Sensor bekannt, bei dem als seismische Masse ein Kippkörper im Boden einer Gehäuseausnehmung angeordnet ist. Bei Angriff einer Kraft oder einer Beschleunigung kippt der Kippkörper um und löst dabei in einer Auslösevorrichtung ein Meßsignal aus. Der Boden der Gehäuseausnehmung des Sensors und auch die Auflagefläche des Kippkörpers auf dem Boden sind dabei plan ausgebildet. Durch eindringende Feuchtigkeit und bei entsprechender ungünstiger Stoffauswahl für das Gehäuse und für den Kippkörper kann es zu einem Hafteffekt des Kippkörpers an dem Boden kommen. Dadurch kann der Kippwinkel im Extremfall bis zu 5 Grad verschoben werden und erst verzögert auslösen. Die dabei wirkenden Adhäsionskräfte zwischen den beiden Oberflächen wirken dabei wie ein nicht beeinflußbarer Schwellwert der ein genaues und sicheres Auslösen des Sensors verhindert.

### Vorteile der Erfindung

Der erfindungsgemäße Sensor mit den kennzeichnenden Merkmalen des Hauptanspruchs hat demgegenüber den Vorteil, daß er einfach und robust baut. Die Reibungs- und Adhäsionskräfte sind sehr gering. Selbst bei eindringender Feuchtigkeit kann es zu keinem Hafteffekt kommen oder er ist nur so gering, daß er den Auslösezeitpunkt negativ beeinflussen könnte. Aufgrund der seitlichen Kanäle in der Gehäusewand können Schmutzteilchen und Verschleißpartikel auf den Boden fallen. Ist dieser Boden trichterförmig ausgebildet, so können diese Schmutzteilchen sich im Trichter ansammeln und die Auslösefähigkeit des Kippkörpers wird nicht negativ beeinflußt. Insbesondere ist der Sensor im Kippbereich des Kippkörpers frei von Schutzteilchen, so daß eine einwandfreie Kippfunktion möglich ist. Durch das Hin- und Herkippen des Kippkörpers bei geringen Beschleunigungen, die noch zu keinem Auslösen der Sicherheitseinrichtungen führen, werden die in dem Kippbereich liegenden Partikel durch das ständige Bewegen des Kippkörpers in den Trichter hin abgedrängt. Aufgrund der besonderen Form der im Boden angeordneten Erhebungen kann der Kippzylinder mit sehr geringen Reibungsverlusten an den Erhebungen abrollen.

Durch die in den Unteransprüchen aufgeführten Maßnahmen sind vorteilhafte Weiterbildungen des im Hauptanspruch angegebenen Sensors möglich.

### Zeichnung

Ausführungsbeispiele der Erfindung sind in der Zeichnung dargestellt und in der nachfolgenden Beschreibung näher erläutert. Es zeigen die Figur 1 einen Längsschnitt durch einen Sensor mit eingesetztem Kippkörper, wobei in gestrichelten Linien der Kippkörper in der sog. Überkopfstellung eingezeichnet ist, die Figur 2 eine Abwandlung des Gehäuses und die Figur 3 eine Einzelheit.

### Beschreibung der Ausführungsbeispiele

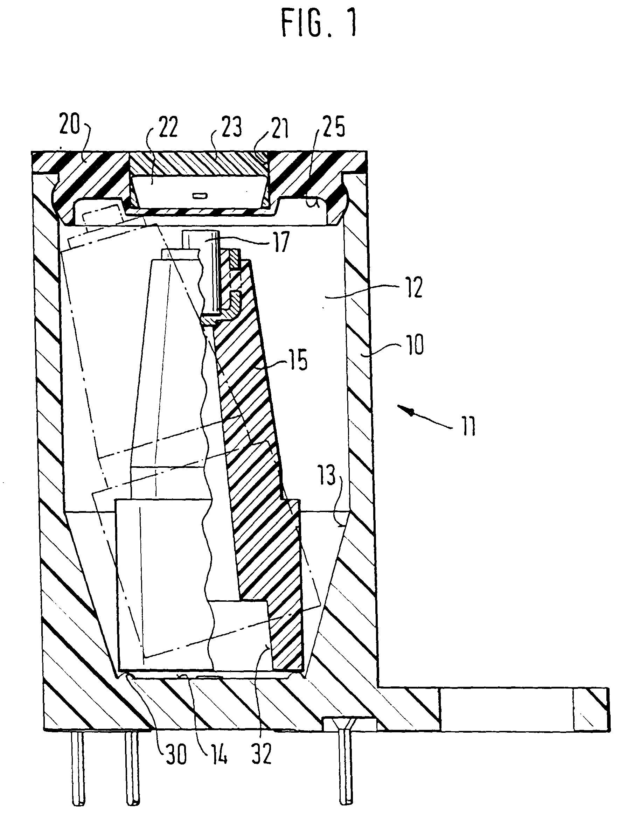

In Figur 1 ist mit 10 das etwa becherförmige Gehäuse eines Sensors 11 bezeichnet, dessen Innenraum von der Öffnung her gesehen einen Bereich 12 mit konstantem Durchmesser und daran anschließend einen konisch verlaufenden Bereich 13 aufweist, wobei der Bereich 13 sich zum Boden 14 hin verengt. Der Steigungswinkel α des konischen Bereichs 13 wird dabei auf die maximal zulässige Hysterese des Kippwinkels abgestimmt. Ferner wird der Winkel α vom Durchmesser eines Kippkörpers im Bereich 13 des Gehäuses 10 bestimmt. Der Kippkörper 15 liegt auf dem Boden 14 auf und dient als seismische Masse. Die dem Boden 13 zugewandten Kanten des Kippkörpers sind im Idealfall scharfkantig. Auf der dem Boden 14 gegenüberliegenden Stirnseite ist im Körper 15 ein Permanentmagnet 17 eingesetzt. Die Polarisationsrichtung des Permanentmagneten 17 ist in Achsrichtung des Kippkörpers 15 ausgerichtet. Der Permanentmagnet 17 ragt ferner etwas über die Stirnfläche des Kippkörpers 15 hinaus.

Der Innenraum des Gehäuses 10 ist von einem Deckel 20 abgeschlossen. In einer Ausnehmung 21 des Deckels 20 ist diametral gegenüber dem Permanentmagneten 17 ein Hallschalter 22 angeordnet. Diese Ausnehmung 21 ist von einer Vergußmasse 23 abgeschlossen, die den Hallschalter 22 vor Umwelteinflüssen schützt. In nicht näher dargestellter Weise ist der Hallschalter 22 über eine Verbindungsleitung mit einem nicht dargestellten Stecker und einer Auslösevorrichtung verbunden. Ferner ist im Deckel 20 auf der dem Kippkörper 15 zugewandten Seite eine Ringnut 25 ausgebildet. Diese Ringnut 25 dient als Sicherung, damit der Kippkörper 15 in der sog. Überkopfstellung, d.h. wenn der Sensor 11 auf dem Kopf steht, der Kippkörper 15 mit seinem zugleich als Fortsatz dienenden Magneten 17 in die Ringnut 25 hineinrutschen kann und somit nicht mehr in die Ausgangsstellung zurückkehren kann.

Statt der hier erwähnten Auslösevorrichtung mit Hilfe eines Permanentmagneten und eines Hallschalters kann auch zum Beispiel ein Reed-Kontakt verwendet werden, oder es kann mit Hilfe von optischen Vorrichtungen, wie zum Beispiel mit Hilfe einer Referenzlichtschranke ein Auslösesignal erzeugt werden. Bei einer Referenzlichtschranke wäre dann zum Beispiel im Deckel des Sensors ein optischer Sender und ein optischer Empfänger nahe beieinander angeordnet. Auf der Stirnfläche des Kippkörpers würde sich statt eines Permanentmagneten eine lichtreflektierende oder abhängig vom Meßverfahren eine Licht nicht reflektierende Fläche befinden.

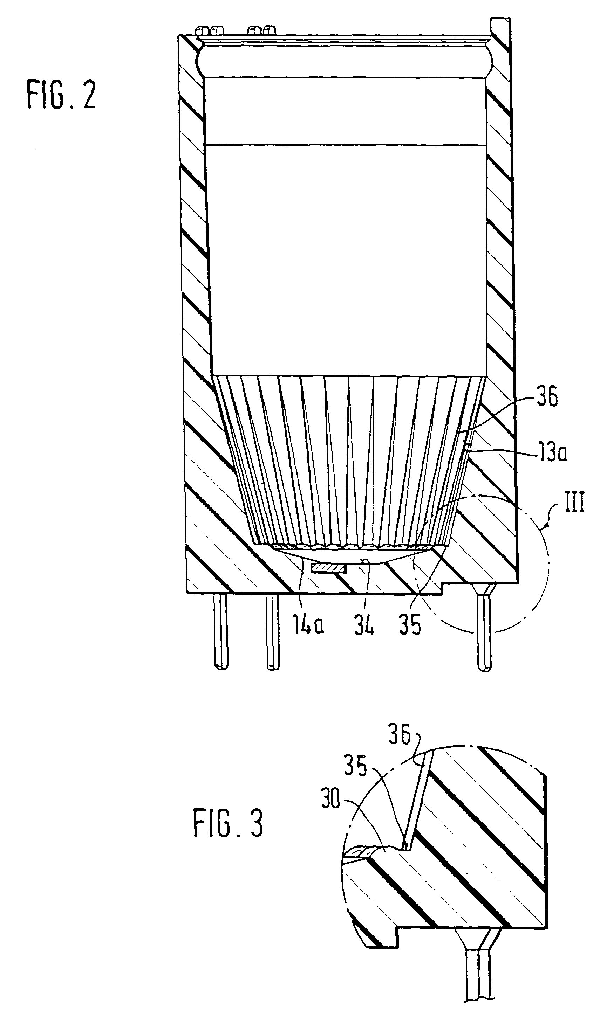

Am Boden 14 des Gehäuses 10 sind erfindungsgemäß Erhebungen 30 ausgebildet, auf denen der Kippkörper 15 mit seiner wenigstens in diesem Bereich planen Stirnseite aufliegt. Die Erhebungen 30 befinden sich möglichst am Boden im Bereich des Randes des Kippkörpers 15. Die Erhebungen 30 sollen die Auflagefläche des Kippkörpers 15 auf dem Boden 14 reduzieren, so daß als Idealfall eine punktförmige Auflage angestrebt ist. Ferner müssen die Erhebungen so hoch sein, daß eindringende Feuchtigkeit zwischen dem Boden 15 und der Stirnseite, d.h. der Auflagefläche des Kippkörpers, keine Adhäsionswirkung zwischen den beiden Flächen ausüben kann. Die Erhebungen 30 weisen somit eine konkave Form auf oder sind, wie in der Figur 3 vergrößert dargestellt, als Kugelkalotten ausgebildet. Der Kalottenradius ist dabei so ausgebildet, daß der Kippkörper 15 gut abrollen kann. Die Kalotte sollte hierzu maximal den halben Kugeldurchmesser aufweisen, sonst würde der Kippkörper nicht auf der Kalotte abrollen, sondern abrutschen und somit wieder Reibungsverluste verursachen. Beeinflußt werden kann ein geringes Haftverhalten zwischen dem Boden 14 bzw. den Erhebungen 30 und dem Kippkörper 15 noch durch eine entsprechende Werkstoffauswahl. Hierzu eignet sich zum Beispiel für den Kippkörper 15 das Material Polyacetal (POM) und für den Boden bzw. die Kalotten 30 der Werkstoff Polybutylenperephthalat (PBT). Die Erhebungen 30 können auf dem Boden zusätzlich aufgespritzt sein oder bereits im Spritzvorgang des Gehäuses mit ausgebildet werden. Die Anordnung der Erhebungen 30 ist abhängig von der Form des Kippkörpers 15. Ist der Kippkörper 15, wie auch in der Figur 1 dargestellt, als Zylinder ausgebildet, so sind die Erhebungen auf einer Kreisbahn angeordnet, wobei zwischen den Erhebungen 30 jeweils ein gleicher Abstand vorhanden ist. Zylinderförmige Kippkörper haben den Vorteil, daß aus allen Richtungen angreifende Beschleunigungen bzw. Kräfte den Kippkörper 15 kippen können und somit ein Meßsignal auslösen können. In diesem Fall spricht man von einem omnidirektionalen Sensor. Mit Hilfe der vom Boden her in den Kippkörper 15 eingebrachten Sacklochbohrung 32 kann der Schwerpunkt des Kippkörpers und somit die Auslöseschwelle beeinflußt werden. Hat der Kippkörper hingegen eine quadratische oder rechteckige Stirnfläche, so löst er nur in bestimmten Beschleunigungsrichtungen aus oder er bevorzugt eine ganz bestimmte durch seine Gestalt hervorgerufene Auslöserichtung. Durch diese Form ist auch die Anordnung der Erhebungen auf dem Boden bedingt, so daß in diesen Fällen die Erhebungen auf der Umfangslinie eines Quadrats oder eines Rechtecks angeordnet sind. Die Form der Erhebungen und deren Abrollgeometrie wird aber durch die Form des Kippkörpers selbst nicht beeinflußt.

In der Abwandlung des Ausführungsbeispiels nach der Figur 2 ist im Boden 14a ein Trichter 34 ausgebildet. Die Erhebungen 30 sind dabei am Rand der Öffnung 35 des Trichters 34 angeordnet; sie sind aber wie bei der Figur 1 beschrieben ausgebildet.

Im konischen Bereich 13a der Gehäuseausnehmung sind Kanäle 36 vorhanden, die bis zum Ansatzpunkt der Erhebungen 30 reichen. Die Form der Kanäle 36 kann dabei verschieden sein, so können zum Beispiel Längsnuten oder Nuten mit V-Form verwendet werden, deren Größe zum Boden 14a hin kontinuierlich zunimmt. Die Kanäle 36 dienen dazu, daß Schmutzteilchen oder Flüssigkeitströpfchen zum Trichter 34 hin gleiten bzw. wandern können und somit die Kippfunktion nicht beeinträchtigen. Sie werden dadurch aus dem eigentlichen Kippbereich des Kippkörpers 15 entfernt. Da zwischen den Erhebungen 30 Abstände vorhanden sind, können die Schutzteilchen in den Trichter 34 wandern.

Da schon bei geringer Beschleunigung der Kippzylinder kippt, werden die im Kippbereich liegenden Partikel durch die ständige Bewegung des Kippkörpers 15 zur Mitte des Zylinders 34 hin abgedrängt.

Die Funktionsweise des Sensors 11 ist hinreichend bekannt und deshalb hier nur kurz erläutert. Wirkt auf den Sensor 11 eine Beschleunigung ein, oder wird er um einen Winkel gekippt, so kippt ebenfalls der Kippkörper 15. Dadurch wird der Permanentmagnet 17 gegenüber dem Hallschalter 22 aus seiner Grundstellung bewegt, wodurch das magnetische Feld des Permanentmagneten 17 mit verschoben wird. Im gekippten Zustand durchdringen nicht mehr die Feldlinien im Bereich der Stirnseite des Permanentmagneten 17 den Hallschalter 22. Dadurch wird ein Schaltimpuls ausgelöst, der mit elektronischen Mitteln, die hier nicht näher dargestellt sind, weiterverarbeitet wird. Der Sensor kann nicht nur zur Feststellung von Fahrzeugneigungen und/oder Kippbewegungen sondern auch zur Erfassung von Beschleunigungsvorgängen, die nicht mit einer Verlagerung des Gehäuses 10 verbunden sind, verwendet werden. Mit Hilfe des erzeugten Meßsignals können angeschlossene Sicherheitseinrichtungen, wie das Ausfahren des Überrollbügels, Air-Bag, Gurtstraffer, etc. ausgelöst werden.

## Patentansprüche

1. Sensor (11), insbesondere zum selbsttätigen Auslösen von Sicherheitseinrichtungen in Kraftfahrzeugen, mit einem Gehäuse (10), in dessen Gehäuseausnehmung sich ein als seismische Masse dienender Kippkörper (15) befindet, der bei Überschreiten eines vorgegebenen Schwellwertes ein Steuersignal auslöst, dadurch gekennzeichnet, daß am Boden (14) der Gehäuseausnehmung wenigstens im Bereich des Rands des Kippkörpers (15) Erhebungen (30) vorhanden sind und daß der Boden des Kippkörpers (15) wenigstens im Bereich der Erhebungen (30) plan ausgebildet ist.

2. Sensor nach Anspruch 1, dadurch gekennzeichnet, daß die Erhebungen (30) konvexe Form haben und in regelmäßigem Abstand voneinander angeordnet sind.

3. Sensor nach Anspruch 1 und/oder 2, dadurch gekennzeichnet, daß die Erhebungen (30) Kugelkalotten sind.

4. Sensor nach einem der Ansprüche 1 bis 3, dadurch gekennzeichnet, daß der Boden (14) als Trichter (34) ausgebildet ist und sich die Erhebungen (30) am Rand der Öffnung (35) des Trichters (34) befinden.

5. Sensor nach einem der Ansprüche 1 bis 4, dadurch gekennzeichnet, daß die Gehäuseausnehmung einen zum Boden (14) hin sich konisch verengenden Bereich (13) aufweist und daß im Bereich (13) Kanäle (36) ausgebildet sind, die bis zum Boden (14) reichen.

6. Sensor nach Anspruch 5, dadurch gekennzeichnet, daß die Kanäle (36) Nuten mit V-Form sind.

7. Sensor nach einem der Ansprüche 1 bis 6, dadurch gekennzeichnet, daß die Längsachse des Kippkörpers (15) senkrecht zur angreifenden Kraft verläuft.

## Claims

1. Sensor (11), in particular for the automatic triggering of safety devices in motor vehicles, having a housing (10), in the housing recess of which there is situated a rocking body (15) which serves as a seismic mass and triggers a control signal when a predetermined threshold value is exceeded, characterized in that elevations (30) are provided on the bottom (14) of the housing recess, at least in the region of the edge of the rocking body (15), and in that the bottom of the rocking body (15) is of planar design, at least in the region of the elevations (30).

2. Sensor according to Claim 1, characterized in that the elevations (30) have a convex shape and are arranged at a uniform distance from one another.

3. Sensor according to Claim 1 and/or 2, characterized in that the elevations (30) are calottes.

4. Sensor according to one of Claims 1 to 3, characterized in that the bottom (14) is designed as a funnel (34) and the elevations (30) are situated at the edge of the opening (35) of the funnel (34).

5. Sensor according to one of Claims 1 to 4, characterized in that the housing recess has a region (13) which narrows conically towards the bottom (14), and in that channels (36) which reach down to the bottom (14) are formed in the region (13).

6. Sensor according to Claim 5, characterized in that the channels (36) are V-shaped grooves.

7. Sensor according to one of Claims 1 to 6, characterized in that the longitudinal axis of the rocking body (15) runs perpendicularly with respect to the force that acts.

## Revendications

1. Capteur (11) notamment pour le déclenchement automatique d'installations de sécurité équipant des véhicules automobiles, comprenant un boîtier (10) dont la cavité loge un organe basculant (15) constituant une masse séismique et qui en cas de dépassement d'un seuil prédéterminé, déclenche un signal de commande, capteur caractérisé en ce que le fond (14) de la cavité du boîtier comporte des bossages (30) au moins au niveau du bord de l'organe basculant (15) et en ce que le fond de l'organe basculant (15) est réalisé plan au moins au niveau des bossages (30).

2. Capteur selon la revendication 1, caractérisé en ce que les bossages (30) ont une forme convexe et sont répartis à des intervalles réguliers.

3. Capteur selon la revendication 1 et/ou 2, caractérisé en ce que les bossages (30) sont des calottes sphériques.

4. Capteur selon l'une des revendications 1 à 3, caractérisé en ce que le fond (14) est en forme d'entonnoir (34) et les bossages (30) se trouvent au bord de l'ouverture (35) de la trémie (34).

5. Capteur selon l'une des revendications 1 à 4, caractérisé en ce que la cavité du boîtier comporte une zone (13) qui se rétrécit de manière conique vers le fond (14) et en ce que, dans la zone (13), il y a des canaux (36) arrivant jusqu'au fond (14).

6. Capteur selon la revendication 5, caractérisé en ce que les canaux (36) sont des rainures en forme de V.

7. Capteur selon l'une des revendications 1 à 6, caractérisé en ce que l'axe longitudinal de l'organe basculant (15) est perpendiculaire à la force à laquelle il est soumis.
